# EUROPÄISCHE PATENTANMELDUNG

(11) **EP 0 926 174 A2**
(43) Veröffentlichungstag der Anmeldung: **30.06.1999**
(21) Anmeldenummer: 98121400.0
(22) Anmeldetag: 11.11.1998
(51) Int. Cl.: C08G 59/14, C09D 163/00

(54) **Bindemittelsysteme für Beschichtungsmittel, Verfahren zu ihrer Herstellung und Verwendung**

(30) Priorität: 23.12.1997 DE 19757762
(71) Anmelder: Bakelite AG, 58642 Iserlohn-Letmathe (DE)
(72) Erfinder: Grundke, Ulrich, 47137 Duisburg (DE); Kalla, Volker, 47167 Duisburg (DE)

(57) **Zusammenfassung**

Die erfindungsgemäßen Bindemittelsysteme bestehen aus Umsetzungsprodukten aus einer oder mehreren Epoxidverbindungen mit durchschnittlich mehr als zwei Epoxidgruppen pro Molekül mit Monocarbonsäuren oder sec. Aminen im molaren Verhältnis der Epoxidgruppen zu den Carboxyl- bzw. sec. Aminogruppen von 1 zu 1 und einem Härter bestehend aus einem oder mehreren Harzen aus der Gruppe der Phenol-, Harnstoff- und Melamin-Harze oder der Polyisocyanate. Sie eignen sich zur Herstellung von Lacken und Beschichtungsmitteln, insbesondere zur Herstellung von Emballagenlacken für Lebensmittelkonserven.

## Beschreibung

Die Erfindung betrifft wärmehärtbare Bindemittelsysteme für Beschichtungsmittel, die als Emballagenlack verwendbar sind, insbesondere als Dosen- oder Tubeninnenlacke.
Derartige Emballagenlacke, die zum Beschichten von Konservendosen aus Weißblech für Lebensmittelkonserven verwendet werden, müssen besonders hohen Anforderungen hinsichtlich der mechanischen Eigenschaften und der Beständigkeit gegen biologische, schwefelhaltige Abbauprodukte genügen. Sie müssen geschmacksneutral sein und dürfen keine monomeren Bestandteile oder Abbauprodukte abgeben.
Aufgrund ihrer guten physikalischen Eigenschaften und chemischen Beständigkeit finden in diesem Sektor bevorzugt die verschiedenen Epoxidharz-Typen Verwendung (vergl. Ullmann's Encyclopedia of Industrial Chemistry, 5. Aufl., Band 18, S. 407 - 412).

Lacke auf Basis von Epoxidharz haben den Nachteil, daß sie noch geringe Mengen niedermolekularer Epoxidverbindungen enthalten, die auch aus dem ausgehärteten Lack entweichen können. Auch wenn, wie in EP-A 0 202 405 vorgeschlagen, als Epoxidharze hochmolekulare Verbindungen mit Molekulargewichten von 13000 bis 17000 und Epoxidäquivalenten von 3000 bis 3900 eingesetzt werden, führt dies zwar zu einer deutlichen Reduzierung dieser unerwünschten niedermolekularen Inhaltsstoffe, jedoch ist infolge der in letzter Zeit verbesserten Analytik und damit verbunden mit deutlich gestiegenen Anforderungen besonders für Emballagen, die im Lebensmittelsektor eingesetzt werden, das Problem nach wie vor nicht gelöst.

Es ist daher Aufgabe der vorliegenden Erfindung, Bindemittelsysteme für Beschichtungsmittel bereitzustellen, die zwar einerseits die guten Eigenschaften der Epoxidharz-Lacke haben, bei denen aber andererseits das Problem der Emission niedermolekularer Epoxidverbindungen aus dem Lack nicht gegeben ist.

Die Lösung der Aufgabe erfolgt durch Bindemittelsysteme gemäß der Ansprüche 1 bis 4 und durch Verfahren zu ihrer Herstellung gemäß der Ansprüche 5 bis 6. Diese Bindemittelsysteme werden bevorzugt verwendet zur Herstellung von Lacken und Beschichtungsmitteln, insbesondere zur Herstellung von Emballagenlacken für Lebensmittelkonserven gemäß den Ansprüchen 7 und 8.

Es wurde gefunden, daß durch Umsetzung von Epoxidverbindungen mit mehr als zwei Epoxidgruppen pro Molekül mit Monocarbonsäuren oder sekundären Aminen niedrigviskose Produkte erhalten werden, die mit Harzen aus der Gruppe der Phenol-, Harnstoff- und Melamin-Harze oder der Polyisocyanate in der Wärme gehärtet werden können, wobei die gehärteten Produkte ausgezeichnete mechanische Eigenschaften, insbesondere gute Tiefziehfähigkeit, Schlagfestigkeit und Haftung auf metallischen Untergründen haben. Darüberhinaus zeigen sie sehr gute chemische Beständigkeiten, insbesondere auch gegenüber schwefelhaltigen biologischen Abbauprodukten. Obwohl diese gehärteten Produkte auf Basis von Epoxidverbindungen hergestellt wurden, können sie aber aufgrund der vorausgegangenen Umsetzung keine niedermolekularen Epoxidverbindungen emittieren. Sie sind darüberhinaus geschmacksneutral und lebensmittelrechtlich unbedenklich.

Die Reaktionen von Epoxidgruppen mit Monocarbonsäuren oder sec. Aminen ist an sich bekannt (vergl. Lee and Neville, Handbook of Epoxy Resins, Mc Graw-Hill Book Company, 1967, Seiten 5-9 und 5-18 bis 5-20). Unter Aufspaltung der Oxirangruppe bilden sich dabei tert. Hydroxylgruppen enthaltende Ester oder tert. Amine.

Gemäß US-A 4 855 366 werden Polyglycidylether mit Monocarbonsäuren im molaren Verhältnis der Epoxid- zu den Carboxylgruppen von 1:0,01 bis 1:0,2 umgesetzt, um dadurch niedrigviskose Epoxidharze zu erhalten. Diese Harze werden dann mit üblichen Epoxidharzhärtern gehärtet. Eine Lösung der erfindungsgemäßen Aufgabe ist mit diesen Harzen nicht möglich, da die Harze im wesentlichen noch Epoxidendgruppen enthalten.

Bei dem erfindungsgemäßen Bindemittelsystem sind zwar die Ausgangsharze auch Polyepoxidverbindungen. Es ist jedoch Ziel der Umsetzung mit Monocabonsäuren bzw. mit sec. Aminen, möglichst alle diese Epoxidgruppen umzuwandeln. Daher werden die Epoxidverbindungen mit den Monocarbonsäuren bzw. den sec. Aminen im molaren Verhältnis der Epoxidgruppen zu den Carboxyl- bzw. sec. Aminogruppen von 1 zu ≥ 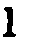 umgesetzt. Um eine möglichst schnelle und vollständige Umsetzung der Epoxidgruppen zu erzielen, wäre ein möglichst großer Überschuß an Monocarbonsäuren oder sec. Aminen günstig. Da dann aber diese Reaktionskomponente wieder aufwendig aus dem Reaktionsgemisch entfernt werden müßte, wird die Umsetzung bevorzugt im stöchiometrischen Verhältnis der Epoxidgruppen zu den Carboxyl- oder sec. Aminogruppen oder mit lediglich geringem Überschuß an Carboxyl- oder sec. Aminogruppen durchgeführt. Das bevorzugte molare Verhältnis der Epoxidgruppen zu den Carboxyl- bzw. sec. Aminogruppen liegt daher im Bereich von 1:1-1,2.

Hinsichtlich der einzusetzenden Epoxidverbindungen besteht als einzige Einschränkung die Notwendigkeit, daß diese Verbindungen mindestens zwei Epoxidgruppen im Molekül enthalten müssen. Es sind daher alle üblichen Epoxidharze wie Bisphenol A-, Bisphenol F-, Epoxy-Novolak-, aliphatische, cycloaliphatische oder heterocyclische Epoxidharze, sowie Glycidylester aber auch monomolekulare Epoxidverbindungen mit mindestens zwei Epoxidgruppen pro Molekül sog. Reaktivverdünner, einsetzbar.

Für die Umsetzung geeignete Monocarbonsäuren sind alle Monocarbonsäuren der allgemeinen Formel R- COOH geeignet, bei denen R ein verzweigter oder unverzweigter aliphatischer, cyclischer, alicyclischer, aromatischer oder araliphatischer Rest mit 1-14 C-Atomen darstellt. Beispiele für bevorzugt verwendete Monocarbonsäuren sind Essig-, Propion-, Benzoe-, Phenylessig- oder Versatic®- Säuren.
Einsetzbar sind aber auch Hydroxycarbonsäuren wie z.B. Glycol-, Milch-, Salicyl- , Gallus-, oder Mandelsäure sowie Hydroxybutter- oder Hydroxyfettsäuren.
Bei dieser Umsetzung einsetzbar wären auch ethylenisch ungesättigte Monocarbonsäuren. Ihre Verwendung ist jedoch nicht angebracht, wenn von den Endprodukten eine gute chemische Beständigkeit gefordert wird.

Sekundäre Amine, die in der erfindungsgemäßen Umsetzung eingesetzt werden können, sind alle Verbindungen der allgemeinen Formel HNR₁R₂, wobei R₁ und R₂ gleich oder verschieden sein können und substituierte oder unsubstituierte, verzweigte oder unverzweigte aliphatische, aromatische oder araliphatische Reste bedeuten oder R₁ und R₂ zusammen einen cycloaliphatischen oder heterocyclischen Rest bilden.
Beispiele für derartige sec. Amine sind Dimethyl-, Diethyl-, Dipropyl-, Diisopropyl-, Methyl-ethyl-, Methyl-propyl-, Methyl-phenyl-, Benzyl-, Diphenyl-, Dibenzylamin, Piperidin, N-Methylpiperazin, Hydroxyethylpiperazin, Pyrrolidin oder Morpholin.
Bevorzugte sec. Amine sind aliphatische Alkanolamine wie z.B. Diethanol-, Methyl- oder Ethyl-ethanolamin.
Bevorzugt werden Verbindungen, die von FDA, BGA bzw. in anderen nationalen Zulassungsvorschriften für Anwendungen im Lebensmittelbereich genannt werden.
Die Umsetzung der Epoxidverbindungen mit den Monocarbonsäuren oder sec. Aminen erfolgt durch einfaches Vermischen und Behandlung des Reaktionsgemische bei einer Temperatur im Bereich von 100 bis 190°C, bevorzugt im Bereich von 120 bis 150°C. Die Reaktionszeit liegt je nach Reaktivität der eingesetzten Substanzen im Bereich von 0,5 bis 5 Stunden. Während der Umsetzung wird der Gehalt des Reaktionsgemisches an Epoxidgruppen bestimmt. Die Umsetzung ist beendet, wenn keine oder nur noch minimale Mengen an Epoxidgruppen nachgewiesen werden können.

Zur Beschleunigung der Umsetzung können dem Reaktionsgemisch geeignete, an sich bekannte Katalysatore wir z. B. Phosphoniumverbindungen oder tert. Amine zugegeben werden. Da diese Produkte aber in der nachfolgenden Härtungsreaktion oder in der ausgehärteten Lackschicht störend wirken können, wird im allgemeinen auf den Zusatz eines Katalysators verzichtet.

Wenn die Monocarbonsäure(n) oder sec. Amin(e) im stöchiometrischen Verhältnis zu den Epoxidgruppen oder nur in geringem Überschuß eingesetzt werden, sind die erhaltenen Umsetzungsprodukte ohne jede weitere Aufarbeitung als Bindemittelkomponente im erfindungsgemäßen Bindemittelsystem einsetzbar.

Sofern die Ausgangsepoxidverbindungen keine hochmolekularen Epoxidharze sind, sind die erhaltenen Umsetzungsprodukte niedrigviskose Verbindungen mit guter Löslichkeit in polaren Lösermitteln und teilweise sogar in Wasser. Die Herstellung der erfindungsgemäßen Bindemittelsysteme erfolgt daher in einfacher Weise durch Vermischen einander entsprechender Lösungen der Umsetzungsprodukte mit Lösungen der gewählten Härter.

Als Härter in den erfindungsgemäßen Bindemittelsystemen können alle Verbindungen eingesetzt werden die mindestens zwei reaktive Gruppen enthalten, die mit den Hydroxylgruppen der Umsetzungsprodukte unter Ausbildung von Hauptvalenzbindungen reagieren können. Um eine möglichst gute Vernetzung zu erzielen, werden hierzu bevorzugt höhermolekulare, multifunktionelle Verbindungen, insbesondere Harze oder Präpolymere gewählt.
Die bevorzugten Harter sind demnach an sich bekannte Harze aus der Gruppe der alkalisch kondensierten Phenol-, Harnstoff- und Melaminharze oder der Polyisocyanate.

Die Menge der eingesetzten Härter wird so bemessen daß ihre reaktiven Gruppen, Methylolgruppen der Harze bzw. Isocyanatgruppen bei den Polyisocyanaten, äquivalent sind zu den Hydroxylgruppen der Umsetzungsprodukte. Abweichungen von
± 10% sind dabei tolerierbar, denn dadurch werden die Eigenschaften der gehärteten Endprodukte noch nicht wesentlich verschlechtert.

Je nach eingesetztem Härter vernetzen die erfindungsgemäßen Bindemittelsysteme bei unterschiedlichen Temperaturen.

Polyisocyanate vernetzen mit den Umsetzungsprodukten aus Epoxidverbindung und Monocarbonsäure oder sec. Aminen bereits bei Raumtemperatur, während die Mischungen aus Umsetzungsprodukten und Phenol-, Harnstoff- oder Melaminharzen erst bei erhöhter Temperatur (>100°C) eine ausreichende Vernetzungsgeschwindigkeit erreichen und bei Raumtemperatur mehrere Wochen lang lagerstabil sind. Entsprechende Mischungen stellen daher beschränkt lagerstabile, einkomponentige Systeme dar. Dabei ist es auch möglich, durch Einsatz an sich bekannter Polyisocyanate mit verkappten Isocyanatgruppen in erfindungsgemäßen Bindemittelsystemen entsprechende lagerstabile, einkomponentige Systeme zu erhalten.

Die erfindungsgemäßen Bindemittelsysteme lassen sich mit polaren Lösemitteln und lösemittelfrei in gängigen Lackrezepturen einsetzen. Im nicht gehärteten Zustand benetzen sie nahezu alle Oberflächen sehr gut. Sie lassen sich auf die verschiedensten Untergründe in dünnen und dicken Schichten gleichmäßig aufbringen und verteilen.
Ihre Härtung erfolgt in der Regel bei Temperaturen im Bereich von 120 bis 250°C.
Dabei entstehen feste aber nicht spröde Lackschichten mit ausgezeichneter Haftung auf Metallen und Metalloxiden und mit guter Tiefziehfähigkeit und Schlagfestigkeit.
Die gehärteten Lackschichten zeigen eine ausgezeichnete chemische Beständigkeit, insbesondere auch gegen schwefelhaltige biologische Abbauprodukte. Die gehärteten Bindemittel emittieren keine niedermolekularen Verbindungen. Sie sind geschmacksneutral und lebensmittelrechtlich unbedenklich.

Aufgrund dieser Eigenschaften eignen sich die erfindungsgemäßen Bindemittelsysteme zur Herstellung von Lacken und Beschichtungsmitteln, insbesondere zur Herstellung von Emballagenlacken für Lebensmittelkonserven.

### Beispiele

### Beispiel 1 (Vergleichsbeispiel)

Festes Epoxidharz auf der Basis von Bisphenol A (Typ 7; Epoxidäquivalent nach ISO 3001: 1800 [Rütapox® 0197]), wird in Methoxipropylacetat (MPA) gelöst und auf 50% Festkörpergehalt verdünnt (Harzlösung 1).

### Analyse der 50%igen Harzlösung I:

- Epoxidäquivalent nach ISO 3001: 3600
- HPLC Bisphenol-A-diglcidylether: 0,9%
- GPC Bisphenol-A-diglycidylether: 1,0%
- Viskosität (25°C): ∼ 3000 mPa.s

### Beispiel 2

1800 g eines festen Epoxidharzes entsprechend dem Epoxidharz aus Beispiel 1 werden in 400 g Methoxipropylacetat gelöst und auf 120°C erhitzt. Es werden 128,2 g (1,05 mol) Benzoesäure zugegeben und das Reaktionsgemisch wird auf 150°C erhitzt. Nach einer Reaktionszeit von 6 h wird mit 1400 g Methoxipropylacetat auf 50% Festkörpergehalt verdünnt (Harzlösung II).

### Analyse der 50%igen Harzlösung II:

- Epoxidäquivalent nach ISO 3001: ∼ 80 000
- HPLC Bisphenol-A-diglycidylether: nicht nachweisbar
- GPC Bisphenol-A-diglycidylether: nicht nachweisbar
- Viskosität (25°C): ∼5500 mPa.s

### Beispiel 3

Es wurde je ein Lack gemäß der folgenden Rezeptur hergestellt, wobei als Harzlösung jeweils Harzlösung I aus Beispiel 1 bzw. Harzlösung II aus Beispiel 2 eingesetzt wurde.

| | | |
|---|---|---|
| Rezeptur: | Phenolresol (50%ig in MPA) | 20 Gewichtsteile |
| | Harzlösung | 50 Gewichtsteile |
| | Methylisobutylketon | 10 Gewichtsteile |
| | Propylenglykolmonomethylether | 10 Gewichtsteile |
| | Solvesso® 100 | 10 Gewichtsteile |
| | Phosphorsäure | 0,5 Gewichtsteile |
| | Netzmittel | 0,5 Gewichtsteile |

Die Lacke wurden jeweils auf ein Blech (10 x 10 cm) mit 8µ Trockenschichtstärke aufgezogen und 10 min lang bei 200°C eingebrannt. Danach wurden die einseitig lackierten Bleche jeweils 24 h in Acetonitril gelagert und anschließend wurde der Gehalt an Bisphenol-A-diglycidylether (BAGDE) in den Acetonitrilproben bestimmt:

Acetonitrilprobe des Bleches, das mit Harzlösung I enthaltendem Lack beschichtet war: 0,035 mg BAGDE

Acetonitrilprobe des Bleches, das mit erfindungsgmäßer Harzlösung II enthaltendem Lack beschichtet war: BAGDE nicht nachweisbar.

## Patentansprüche

1. Bindemittelsysteme bestehend aus Umsetzungsprodukten aus einer oder mehreren Epoxidverbindungen mit durchschnittlich mehr als zwei Epoxidgruppen pro Molekül mit Monocarbonsäuren oder sec. Aminen im molaren Verhältnis der Epoxidgruppen zu den Carboxyl- bzw. sec. Aminogruppen von 1 zu ≥ 1 und einem Härter bestehend aus einem oder mehreren Harzen aus der Gruppe der Phenol-, Harnstoff- und Melamin-Harze oder der Polyisocyanate.

2. Bindemittelsysteme nach Anspruch 1, dadurch gekennzeichnet, daß das molare Verhältnis der Epoxidgruppen zu den Carboxyl- bzw. sec. Aminogruppen im Bereich von 1 zu 1 - 1,2 liegt.

3. Bindemittelsysteme nach den Ansprüchen 1 und 2, dadurch gekennzeichnet, däß die Monocarbonsäuren 2 - 15 C-Atome haben.

4. Bindemittelsystem nach den Ansprüchen 1 und 2, dadurch gekennzeichnet, daß die sec. Amine Alkanolamine sind.

5. Verfahren zur Herstellung von Bindemittelsystemen gemäß einem oder mehreren der Ansprüche 1 bis 4, dadurch gekennzeichnet, daß eine oder mehrere Epoxidverbindungen mit mehr als zwei Epoxidgruppen pro Molekül mit einer oder mehreren Carbonsäuren oder sec. Aminen im molaren Verhältnis der Epoxidgruppen zu den Carbonsäuregruppen oder sec. Aminogruppen von 1 zu ≥ 1 umgesetzt werden, bis im Reaktionsgemisch keine Epoxidgruppen mehr nachweisbar sind und das erhaltene Umsetzungsprodukt mit einem Härter aus der Gruppe der Phenol-, Harnstoff- und Melamin-Harze oder der Polyisocyanate vermischt wird.

6. Verfahren nach Anspruch 5, dadurch gekennzeichnet, daß die Härtermenge so gewählt wird, daß die reaktiven Gruppen der Härter äquivalent sind zu den Hydroxylgruppen der Umsetzungsprodukte.

7. Verwendung der Bindemittelsysteme gemäß der Ansprüche 1 bis 4 zur Herstellung von Lacken und Beschichtungsmitteln.

8. Verwendung von Bindemittelsystemen gemäß der Ansprüche 1 bis 4 zur Herstellung von Emballagenlacken für Lebensmittelkonserven.
